# EUROPEAN PATENT APPLICATION

(11) **EP 4 379 895 A1**
(43) Date of publication of application: **05.06.2024**
(21) Application number: 22849084.3
(22) Date of filing: 23.06.2022
(51) Int. Cl.: H01M 10/0587, H01M 10/0566, H01M 50/443, H01M 50/446, H01M 50/451, H01M 50/46, H01M 50/548

(54) **NON-AQUEOUS ELECTROLYTE SECONDARY BATTERY**

(30) Priority: 29.07.2021 JP 2021124342
(71) Applicant: Panasonic Energy Co., Ltd., Osaka 570-8511 (JP)
(72) Inventor: SUGII, Noriko, Kadoma-shi, Osaka 571-0057 (JP); TANIGAWA, Kei, Kadoma-shi, Osaka 571-0057 (JP)
(74) Representative: Novagraaf International SA
(86) International application number: PCT/JP2022/025077
(87) International publication number: WO 2023/008011

(57) **Abstract**

Provided is a non-aqueous electrolyte secondary battery that has improved cycle characteristics. A non-aqueous electrolyte secondary battery, which is one aspect of the present disclosure, comprises: a wound electrode body in which a positive electrode and a negative electrode are wound, with a first separator that is disposed on the winding inner side of the positive electrode and a second separator that is disposed on the winding outer side of the positive electrode being interposed therebetween; an electrolytic solution; and an exterior body which accommodates the electrode body and the electrolytic solution, wherein the first separator has a first base material layer and a first coating layer that is formed on the surface of the first base material layer which faces the positive electrode, the second separator has a second base material layer and a second coating layer that is formed on the surface of the second base material layer which faces the positive electrode, the first coating layer and the second coating layer each include a filler and an organic material, and the content of the filler in the first coating layer is higher than the content of the filler in the second coating layer.

## Description

### TECHNICAL FIELD

The present disclosure relates to a non-aqueous electrolyte secondary battery.

### BACKGROUND ART

Conventionally, a non-aqueous electrolyte secondary battery is widely used in which a wound electrode assembly in which a band-shaped positive electrode and negative electrode are wound with a separator interposed therebetween, is housed in a metallic exterior. The separator inhibits occurrence of short circuit due to contacting of the positive electrode and the negative electrode.

Patent Literature 1 discloses art of improving adhesiveness between the separator and the electrodes while keeping safety of the battery by stacking two coating layers on a surface of a substrate layer being a porous substrate and by setting a content rate of a binder in the coating layer on the surface side to be higher than a content rate of a binder in the coating layer on the substrate layer side.

Patent Literature 2 discloses art of preventing battery runaway at high temperature by stacking coating layers on both surfaces of a substrate layer being a fine porous film and by setting a content rate of the binder in the coating layer disposed on a negative electrode side to be higher than a content rate of a binder in the coating layer disposed on a positive electrode side.

### CITATION LIST

### PATENT LITERATURE

PATENT LITERATURE 1: Japanese Unexamined Patent Application Publication No. 2013-235824
PATENT LITERATURE 2: Japanese Unexamined Patent Application Publication No. 2015-88430

### SUMMARY

### TECHNICAL PROBLEM

In the second battery, it is an important challenge to inhibit decrease in a battery capacity due to repeated charge and discharge to improve cycle characteristics. The present inventors have made intensive investigation, and consequently found that, in a wound electrode assembly, charge-discharge reactions hardly proceed uniformly on an inner side of winding and an outer side of winding of the positive electrode, which is likely to deteriorate the cycle characteristics. This is presumably because the amount of an electrolytic solution retained on the inner side of winding of the positive electrode is smaller than the amount of the electrode assembly retained on the outer side of winding of the positive electrode. The art disclosed in Patent Literature 1 and Patent Literature 2 does not consider the deterioration of the cycle characteristics due to the difference in retainability of the electrolytic solution on the inner side of winding and the outer side of winding of the positive electrode, and still has a room for improvement.

An object of the present disclosure is to provide a non-aqueous electrolyte secondary battery having improved cycle characteristics.

### SOLUTION TO PROBLEM

A non-aqueous electrolyte secondary battery of an aspect of the present disclosure comprises: a wound electrode assembly in which a positive electrode and a negative electrode are wound with a first separator disposed on an inner side of winding of the positive electrode and a second separator disposed on an outer side of winding of the positive electrode interposed therebetween; an electrolytic solution; and an exterior that houses the electrode assembly and the electrolytic solution, wherein the first separator has a first substrate layer and a first coating layer formed on a surface of the first substrate layer facing the positive electrode, the second separator has a second substrate layer and a second coating layer formed on a surface of the second substrate layer facing the positive electrode, the first coating layer and the second coating layer each include a filler and an organic material, and a content rate of the filler in the first coating layer is higher than a content rate of the filler in the second coating layer.

### ADVANTAGEOUS EFFECT OF INVENTION

According to the non-aqueous electrolyte secondary battery of the present disclosure, the cycle characteristics can be improved.

### BRIEF DESCRIPTION OF DRAWING

FIG. 1 is a vertical sectional view of a cylindrical battery of an example of an embodiment.
FIG. 2 is a transverse sectional view of a wound electrode assembly included in the cylindrical battery illustrated in FIG. 1.

### DESCRIPTION OF EMBODIMENTS

Hereinafter, an example of an embodiment of a non-aqueous electrolyte secondary battery according to the present disclosure will be described in detail with reference to the drawings. Hereinafter, a cylindrical battery in which a wound electrode assembly is housed in a cylindrical exterior will be exemplified, but the exterior is not limited to the cylindrical shape, and may be a rectangular exterior, a coin-shaped exterior, or the like, for example. The exterior may be a pouch composed of laminated sheets including a metal layer and a resin layer. In the following description, specific shapes, materials, values, directions, and the like, which are examples for facilitating understanding of the present disclosure, may be appropriately modified with specifications of non-aqueous electrolyte secondary batteries. When a plurality of embodiments and modified examples are included in the following description, use in appropriate combination of characteristic portions thereof is anticipated in advance.

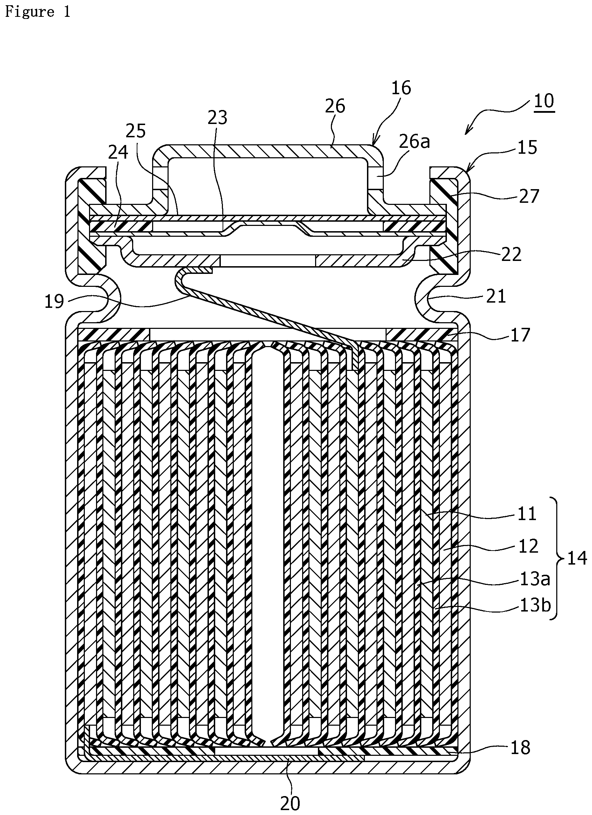

FIG. 1 is a vertical sectional view of a cylindrical battery 10 of an example of an embodiment. In the cylindrical battery 10 illustrated in FIG. 1, an electrode assembly 14 and an electrolytic solution (not illustrated) are housed in an exterior 15. The electrode assembly 14 has a wound structure in which a band-shaped positive electrode 11 and a band-shaped negative electrode 12 are wound with a first separator 13a disposed on an inner side of winding of the positive electrode 11 and a second separator 13b disposed on an outer side of winding of the positive electrode 11 interposed therebetween. Hereinafter, for convenience of description, a direction along an axial direction of the exterior 15 will be described as "the vertical direction or the upper-lower direction", a side of the sealing assembly 16 will be described as "the upper side", and a side of a bottom of the exterior 15 will be described as "the lower side". A winding axis direction of the electrode assembly 14 substantially coincides with the axial direction of the exterior 15. A direction perpendicular to the axial direction of the exterior 15 will be described as "the transverse direction or the radial direction", a side of a center in the radial direction of the exterior 15 will be described as "the inner side", and an outer side in the radial direction will be described as "the outer side".

As a non-aqueous solvent (organic solvent) of the electrolytic solution, carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As the esters, carbonate esters such as methyl acetate (MA) and methyl propionate (MP) are preferably used. The non-aqueous solvent may contain a halogen-substituted derivative in which hydrogen atoms of these solvents are at least partially substituted with a halogen atom such as fluorine. As the halogen-substituted derivative, fluoroethylene carbonate (FEC), methyl fluoropropionate (FMP), and the like are preferably used, for example. As an electrolyte salt in the electrolytic solution, LiPF₆, LiBF₄, LiCF₃SO₃, lithium bis(fluorosulfonyl)imide, lithium bis(trifluoromethanesulfonyl)imide, and the like, and a mixture thereof may be used. The amount of the electrolyte salt to be dissolved in the non-aqueous solvent is, for example, greater than or equal to 0.5 mol/L and less than or equal to 2.0 mol/L.

The opening of the end of the exterior 15 is capped with the sealing assembly 16 to seal an inside of the cylindrical battery 10. Insulating plates 17 and 18 are provided on an upper and lower sides of the electrode assembly 14, respectively. A positive electrode lead 19 extends upward from an end face of the upper side of the electrode assembly 14 through a through hole of the insulating plate 17, and welded with a lower face of the filter 22, which is a bottom plate of the sealing assembly 16. In the cylindrical battery 10, a cap 26, which is a top plate of the sealing assembly 16 electrically connected to the filter 22, becomes a positive electrode terminal. Meanwhile, a negative electrode lead 20 extends from an end face of the lower side of the electrode assembly 14 through an outside of the insulating plate 18 toward a bottom side of the exterior 15, and welded with a bottom inner face of the exterior 15. In the cylindrical battery 10, the exterior 15 becomes a negative electrode terminal.

The exterior 15 is, for example, a bottomed cylindrical metallic exterior housing can. A gasket 27 is provided between the exterior 15 and the sealing assembly 16 to achieve sealability inside the cylindrical battery 10. The exterior 15 has a grooved portion 21 formed by, for example, pressing the side wall thereof from the outside. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through a through hole 26a of the cap 26.

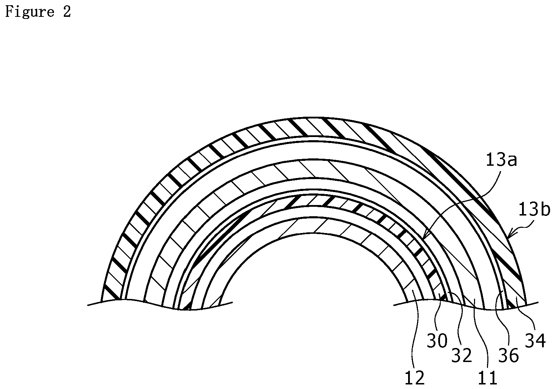

Hereinafter, the electrode assembly 14 will be described in detail with reference to FIG. 2. FIG. 2 is a transverse sectional view of the wound electrode assembly 14 included in the cylindrical battery 10 illustrated in FIG. 1. In the electrode assembly 14, the first separator 13a is disposed on the inner side of winding of the positive electrode 11, and the second separator 13b is disposed on the outer side of winding of the positive electrode 11. The negative electrode 12, the first separator 13a, the positive electrode 11, and the second separator 13b are all formed in a band shape, and stacked in this order and spirally wound around a winding axis to be a winding center of the electrode assembly 14 to form an alternately stacked state in the radial direction of the electrode assembly 14. In the electrode assembly 14, a longitudinal direction of the positive electrode 11 and the negative electrode 12 is a winding direction, and a width direction of the positive electrode 11 and the negative electrode 12 is a winding axis direction. The inner side of winding means an inner side (winding axis side) in the radial direction of the electrode assembly 14, and the outer side of winding means an outer side in the radial direction of the electrode assembly 14.

The positive electrode 11 has a positive electrode current collector and a positive electrode mixture layer formed on a surface of the positive electrode current collector. For the positive electrode current collector, a foil of a metal stable within a potential range of the positive electrode, such as aluminum, a film in which such a metal is disposed on a surface layer, or the like may be used. A thickness of the positive electrode current collector is, for example, greater than or equal to 10 µm and less than or equal to 30 µm.

The positive electrode mixture layer is preferably formed on both surfaces of the positive electrode current collector. A thickness of the positive electrode mixture layer is, for example, greater than or equal to 10 µm and less than or equal to 150 µm on one side of the positive electrode current collector. The positive electrode mixture layer includes, for example, a positive electrode active material, a conductive agent, and a binder. The positive electrode may be produced by, for example, applying a positive electrode mixture slurry including the positive electrode active material, the conductive agent, the binder, and the like on both the surfaces of the positive electrode current collector, drying the coating, and subsequently rolling the coating by using a roller or the like.

Examples of the positive electrode active material included in the positive electrode mixture layer may include a lithium-transition metal oxide containing a transition metal element such as Co, Mn, and Ni. The lithium-transition metal oxide is, for example, LiₓCoO₂, Li_{X}NiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or as a mixture thereof. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3).

Examples of the conductive agent included in the positive electrode mixture layer include carbon-based particles such as carbon black (CB), acetylene black (AB), Ketjenblack, carbon nanotube (CNT), graphene, and graphite. These may be used singly, or in combination of two or more.

Examples of the binder included in the positive electrode mixture layer include fluororesins such as polytetrafluoroethylene (PTFE) and polyvinylidene fluoride (PVDF), polyacrylonitrile (PAN), polyimide resins, acrylic resins, and polyolefin resins. These may be used singly, or in combination of two or more.

The negative electrode 12 has a negative electrode current collector and a negative electrode mixture layer formed on a surface of the negative electrode current collector. For the negative electrode current collector, a foil of a metal stable within a potential range of the negative electrode, such as copper, a film in which such a metal is disposed on a surface layer, or the like may be used. A thickness of the negative electrode current collector is, for example, greater than or equal to 5 µm and less than or equal to 30 µm.

The negative electrode mixture layer is preferably formed on both surfaces of the negative electrode current collector. A thickness of the negative electrode mixture layer is, for example, greater than or equal to 10 µm and less than or equal to 150 µm on one side of the negative electrode current collector. The negative electrode mixture layer includes, for example, a negative electrode active material and a binder. The negative electrode may be produced by, for example, applying a negative electrode mixture slurry including the negative electrode active material, the binder, and the like on both the surfaces of the negative electrode current collector, drying the coating, and subsequently rolling the coating by using a roller or the like.

The negative electrode active material included in the negative electrode mixture layer is not particularly limited as long as it may reversibly occlude and release lithium ions, and a carbon material such as graphite is typically used. The graphite may be any of: a natural graphite such as flake graphite, massive graphite, and amorphous graphite; and an artificial graphite such as massive artificial graphite and graphitized mesophase-carbon microbead. As the negative electrode active material, a metal that forms an alloy with Li, such as Si or Sn, a metal compound including Si, Sn, or the like, a lithium-titanium composite oxide, or the like may be used. For example, a Si-containing compound represented by SiOₓ (0.5 ≤ x ≤ 1.6); or a Si-containing compound in which Si fine particles are dispersed in a lithium silicate phase represented by Li_{2y}SiO_{(2+y)} (0 < y < 2) may be used in combination with graphite.

Examples of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These materials may be used singly, or in combination of two or more.

As illustrated in FIG. 2, the first separator 13a is disposed on the inner side of winding of the positive electrode 11, and the second separator 13b is disposed on the outer side of winding of the positive electrode 11. That is, in the electrode assembly 14, the first separator 13a is disposed so as to be sandwiched between the negative electrode 12 on the inner side in the radial direction and the positive electrode 11 on the outer side in the radial direction. The second separator 13b is disposed so as to be sandwiched between the positive electrode 11 on the inner side in the radial direction and the negative electrode 12 on the outer side in the radial direction. The first separator 13a and the second separator 13b are interposed between the positive electrode 11 and the negative electrode 12 to physically and electrically separate the positive electrode 11 and the negative electrode 12.

The first separator 13a has a first substrate layer 30 and a first coating layer 32 formed on a surface of the first substrate layer 30 facing the positive electrode 11. The second separator 13b has a second substrate layer 34 and a second coating layer 36 formed on a surface of the second substrate layer 34 facing the positive electrode 11.

For the first substrate layer 30 and the second substrate layer 34, a porous substrate having an ion permeation property and an insulation property is used, for example. Specific examples of the porous substrate include a fine porous thin film, a woven fabric, and a nonwoven fabric. Examples of a material of the first substrate layer 30 and the second substrate layer 34 include polyolefins such as polyethylene, polypropylene, and a copolymer of polyethylene and an α-olefin, acrylic resins, polystyrene, polyesters, and cellulose. A thickness of the first substrate layer 30 and the second substrate layer 34 is, for example, greater than or equal to 3 µm and less than or equal to 20 µm.

The first coating layer 32 and the second coating layer 36 each include a filler and an organic material, and a content rate of the filler in the first coating layer 32 is larger than a content rate of the filler in the second coating layer 36. Here, the content rate of the filler in the first coating layer 32 is a proportion of a mass of the filler included in the first coating layer 32 based on a mass of the first coating layer 32. The content rate of the filler in the second coating layer 36 is a proportion of a mass of the filler included in the second coating layer 36 based on a mass of the second coating layer 36.

Since the filler has high compatibility with the electrolytic solution, the first coating layer 32 has higher retainability of the electrolytic solution than the second coating layer 36. Disposing the first coating layer 32 on the inner side of winding of the positive electrode 11 and disposing the second coating layer 36 on the outer side of winding of the positive electrode 11 may reduce a difference in retainability of the electrolytic solution between the inner side of winding and the outer side of winding of the positive electrode 11, and thereby the cycle characteristics may be improved.

The content rate of the filler in the first coating layer 32 is preferably greater than or equal to 75 mass%, and more preferably greater than or equal to 85 mass%. An upper limit of the content rate of the filler in the first coating layer 32 is, for example, 95 mass%.

The content rate of the filler in the second coating layer 36 is preferably less than or equal to 60 mass%, and more preferably less than or equal to 50 mass%. A lower limit of the content rate of the filler in the second coating layer 36 is, for example, 10 mass%.

A thickness of the first coating layer 32 and the second coating layer 36 is not particularly limited, and for example, each greater than or equal to 1 µm and less than or equal to 10 µm. A method for forming the first coating layer 32 and the second coating layer 36 is not particularly limited, and for example, the coating layers may be formed on at least one major surface of the first substrate layer 30 and the second substrate layer 34 by using a doctor blade method, a gravure coating method, a transferring method, or a die coating method.

As for containing the filler included in the first coating layer 32 and the second coating layer 36, a melting point or a thermal softening point of the filler is preferably greater than or equal to 150°C, and more preferably greater than or equal to 200°C. According to this, an effect of inhibiting thermal contraction may be imparted to the separator. Examples of the filler include metal oxide particles, metal nitride particles, metal fluoride particles, metal carbide particles, and sulfide particles. Examples of the metal oxide particles include aluminum oxide (for example, α-Al₂O₃), titanium oxide, magnesium oxide, zirconium oxide, nickel oxide, silicon oxide, and manganese oxide. Examples of the metal nitride oxide particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide. Examples of the sulfide particles include barium sulfate. The filler may also be porous aluminosilicate salts such as zeolite (M_{2/n}O·Al₂O₃·xSiO₂·yH₂O, M represents a metal element, x≥2, and y≥0), layered silicate salts such as talc (Mg₃Si₄O₁₀(OH)₂), and minerals such as barium titanate (BaTiO₃) and strontium titanate (SrTiO₃). These may be used singly, or in combination of two or more.

A BET specific surface area of the filler is not particularly limited, and preferably within a range of greater than or equal to 1 m²/g and less than or equal to 20 m²/g, and more preferably within a range of greater than or equal to 3 m²/g and less than or equal to 15 m²/g. An average particle diameter of the filler is not particularly limited, and preferably greater than or equal to 0.1 µm and less than or equal to 5 µm, and more preferably greater than or equal to 0.2 µm and less than or equal to 1 µm.

The organic material is a material that may form a film on the substrate layer. Furthermore, the organic material preferably has a function of bonding the fillers each other and bonding the filler and the substrate layer. The organic material is preferably a polymer material, and examples thereof include fluororesins such as polyvinylidene fluoride (PVDF) and polytetrafluoroethylene (PTFE), polyimide resins, polyamide resins, acrylic resins, polyolefin resins, styrene-butadiene rubber (SBR), nitrile-butadiene rubber (NBR), carboxymethylcellulose (CMC) or a salt thereof, polyacrylic acid (PAA) or a salt thereof, and polyvinyl alcohol (PVA). These may be used singly, or in combination of two or more.

### EXAMPLES

Hereinafter, the present disclosure will be further described with Examples, but the present disclosure is not limited to these Examples.

### <Example>

### [Production of Positive Electrode]

As a positive electrode active material, aluminum-containing lithium nickel cobaltate represented by LiNi_{0.88}Co_{0.09}Al_{0.03}O₂ was used. 98 parts by mass of LiNi_{0.88}Co_{0.09}Al_{0.03}O₂, 1 part by mass of acetylene black, and 1 part by mass of polyvinylidene fluoride (PVDF, average molecular weight: 1.1 millions) were mixed, and an appropriate amount of N-methyl-2-pyrrolidone (NMP) was added to prepare a positive electrode mixture slurry. Then, this positive electrode mixture slurry was applied to both surfaces of a band-shaped positive electrode current collector made of aluminum foil and having a thickness of 15 µm, the coating was dried and subsequently rolled, and cut to a predetermined electrode size to produce a positive electrode in which positive electrode mixture layers were formed on both the surfaces of the positive electrode current collector. On a substantial center in a longitudinal direction of the positive electrode, a positive electrode exposed portion where the mixture layer was absent and the current collector surface was exposed was provided, and a positive electrode lead made of aluminum was welded with the positive electrode exposed portion.

### [Production of Negative Electrode]

95 parts by mass of graphite, 5 parts by mass of Si oxide, 1 part by mass of carboxymethylcellulose (CMC), and 1.2 parts by mass of styrene-butadiene rubber (SBR) were mixed, and an appropriate amount of water was added to prepare a negative electrode mixture slurry. Then, this negative electrode mixture slurry was applied to both surfaces of a band-shaped negative electrode current collector made of copper foil and having a thickness of 8 µm, the coating was dried and subsequently rolled, and cut to a predetermined electrode size to produce a negative electrode in which negative electrode mixture layers were formed on both the surfaces of the negative electrode current collector. On an outer end of winding of the negative electrode, a negative electrode exposed portion where the mixture layer was absent and the current collector surface was exposed was provided, and a negative electrode lead made of nickel was welded with the negative electrode exposed portion.

### [Production of Separator A]

As a substrate layer, a porous substrate made of polyethylene and having a thickness of 12 µm was used. An α-Al₂O₃ powder as a filler and an acrylate ester-based binder emulsion as an organic material were mixed at a solid-content mass ratio of 95:5, and then an appropriate amount of water was added so that a solid-content concentration was 10 mass% to prepare a dispersion liquid A. The dispersion liquid A was applied to the entire region of one surface of the porous substrate by using a micro-gravure coater, and the coating was dried to form an coating layer A having an average thickness of 4 µm on one surface of the substrate.

### [Production of Separator B]

As a substrate layer, a porous substrate made of polyethylene and having a thickness of 12 µm was used. To a solution in which paraphenylenediamine and calcium chloride were dissolved in NMP was added terephthaloyl dichloride (TPC), and the para-aramid was polymerized to obtain a para-aramid solution having a solid-content concentration of the para-aramid of 2 mass%. An α-Al₂O₃ powder and the para-aramid solution were mixed so that a solid-content mass ratio between the α-Al₂O₃ powder as a filler and the para-aramid as an organic material was 50:50 to prepare a dispersion liquid B. The dispersion liquid B was applied to the entire region of one surface of the porous substrate by using a micro-gravure coater, and the coating was dried to form an coating layer B having an average thickness of 4 µm on one surface of the substrate.

### [Preparation of Electrolytic solution]

Into 100 parts by mass of a mixed solvent composed of ethylene carbonate (EC) and dimethyl carbonate (DMC) (EC:DMC = 1:3 at a volume ratio), 5 parts by mass of vinylene carbonate (VC) was added. Into this mixed solvent, LiPF₆ was dissolved so that a concentration was 1 mol/L to prepare an electrolytic solution.

### [Production of Secondary Battery]

The positive electrode and the negative electrode were spirally wound with the separator A as a first separator and the separator B as a second separator interposed therebetween to produce a wound electrode assembly. In this time, the separator A was disposed on an inner side of winding of the positive electrode so that the coating layer A faces the positive electrode, and the separator B was disposed on an outer side of winding of the positive electrode so that the coating layer B faces the positive electrode. Insulating plates were respectively disposed on upper and lower sides of the electrode assembly, and the electrode assembly was housed in an exterior housing can. The negative electrode lead was welded with a bottom of the bottomed cylindrical exterior housing can, and the positive electrode lead was welded with a sealing assembly. The electrolytic solution was injected into the exterior housing can, and an opening of the exterior housing can was sealed with a sealing assembly via a gasket to produce a secondary battery.

### [Evaluation of Capacity Retention]

Under an environment at 25°C, the secondary battery was charged at a constant current of 0.1 It until a battery voltage reached 4.2 V, and then charged at a constant voltage of 4.2 V until a current value reached 0.05 It. Thereafter, the secondary battery was discharged at a constant current of 0.5 It until the battery voltage reached 2.5 V. This charge and discharge were specified as one cycle, and the charge and discharge were performed with 500 cycles. A capacity retention in the charge-discharge cycle of the secondary battery was determined with the following formula.Capacity retention = (Discharge capacity at 500th cycle/Discharge capacity at 1st cycle) × 100

### <Example 2>

### [Production of Separator C]

As a substrate layer, a porous substrate made of polyethylene and having a thickness of 12 µm was used. An α-Al₂O₃ powder as a filler and an acrylate ester-based binder emulsion as an organic material were mixed at a solid-content mass ratio of 85:15, and then an appropriate amount of water was added so that a solid-content concentration was 10 mass% to prepare a dispersion liquid C. The dispersion liquid C was applied to the entire region of one surface of the porous substrate by using a micro-gravure coater, and the coating was dried to form an coating layer C having an average thickness of 4 µm on one surface of the substrate.

A secondary battery was produced to evaluate capacity retention in the same manner as in Example 1 except that, in the production of the secondary battery, the separator C was used as the first separator, and the separator C was disposed on the inner side of winding of the positive electrode so that the coating layer C faces the positive electrode.

### <Comparative Example 1>

A secondary battery was produced to evaluate capacity retention in the same manner as in Example 1 except that, in the production of the secondary battery, the separators C were used as the first separator and as the second separator, and the separators C were disposed on the inner side of winding and the outer side of winding of the positive electrode so that both the coating layers C face the positive electrode.

### <Comparative Example 2>

A secondary battery was produced to evaluate capacity retention in the same manner as in Example 1 except that, in the production of the secondary battery, the separator B was used as the first separator, the separator B was disposed on the inner side of winding of the positive electrode so that the coating layer B faces the positive electrode, the separator A was used as the second separator, and the separator A was disposed on the outer side of winding of the positive electrode so that the coating layer A faces the positive electrode.

### <Comparative Example 3>

A secondary battery was produced to evaluate capacity retention in the same manner as in Example 1 except that, in the production of the secondary battery, the separator B was used as the first separator, the separator B was disposed on the inner side of winding of the positive electrode so that the coating layer B faces the positive electrode, the separator C was used as the second separator, and the separator C was disposed on the outer side of winding of the positive electrode so that the coating layer C faces the positive electrode.

Table 1 shows the evaluation results of the secondary batteries according to Examples and Comparative Examples. Table 1 also shows the content rate of the filler in each of the first coating layer and the second coating layer.

**[Table 1]**

| | Filler content rate (mass%) | | Capacity retention (%) |
|---|---|---|---|
| | First coating layer | Second coating layer | |
| Example 1 | 95 (Coating layer A) | 50 (Coating layer B) | 82.7 |
| Example 2 | 85 (Coating layer C) | 50 (Coating layer B) | 82.3 |
| Comparative Example 1 | 85 (Coating layer C) | 85 (Coating layer C) | 75.3 |
| Comparative Example 2 | 50 (Coating layer B) | 95 (Coating layer A) | 66.2 |
| Comparative Example 3 | 50 (Coating layer B) | 85 (Coating layer C) | 69.7 |

The secondary batteries of Examples have higher capacity retention than the secondary batteries of Comparative Examples, and have improved cycle characteristics. This is presumably because, by setting the content rate of the filler in the first coating layer facing the positive electrode on the inner side of winding to be higher than the content rate of the filler in the second coating layer facing the positive electrode on the outer side of winding, the retainability of the electrolytic solution on the inner side of winding of the positive electrode was improved, and accordingly the uniformity of the charge-discharge reactions on both the surfaces of the positive electrode was improved.

### REFERENCE SIGNS LIST

10 cylindrical battery, 11 positive electrode, 12 negative electrode, 13a first separator, 13b second separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 27 gasket, 30 first substrate layer, 32 first coating layer, 34 second substrate layer, 36 second coating layer

## Claims

1. A non-aqueous electrolyte secondary battery, comprising:
a wound electrode assembly in which a positive electrode and a negative electrode are wound with a first separator disposed on an inner side of winding of the positive electrode and a second separator disposed on an outer side of winding of the positive electrode interposed therebetween;
an electrolytic solution; and
an exterior that houses the electrode assembly and the electrolytic solution, wherein
the first separator has a first substrate layer and a first coating layer formed on a surface of the first substrate layer facing the positive electrode,
the second separator has a second substrate layer and a second coating layer formed on a surface of the second substrate layer facing the positive electrode,
the first coating layer and the second coating layer each include a filler and an organic material, and
a content rate of the filler in the first coating layer is higher than a content rate of the filler in the second coating layer.

2. The non-aqueous electrolyte secondary battery according to claim 1, wherein the content rate of the filler in the first coating layer is greater than or equal to 75 mass%, and the content rate of the filler in the second coating layer is less than or equal to 60 mass%.
